# EUROPEAN PATENT APPLICATION

(11) **EP 3 926 760 A1**
(43) Date of publication of application: **22.12.2021**
(21) Application number: 21180067.7
(22) Date of filing: 17.06.2021
(51) Int. Cl.: H01R 13/506, H01R 13/52, H01R 13/58, H02G 3/06

(54) **ADAPTOR FOR CONNECTING AN ELECTRICAL PLUG WITH A FLEXIBLE PREWIRED CONDUIT**

(30) Priority: 18.06.2020 NL 2025853
(71) Applicant: Pipelife Nederland B.V., 1601 MA Enkhuizen (NL)
(72) Inventor: Wijnker, Christiaan Johannes Nicolaas, 1606 XC Venhuizen (NL); Tinke, Cornelis Willem, 4714 EJ Sprundel (NL)
(74) Representative: Nederlandsch Octrooibureau

(57) **Abstract**

A method and adaptor for connecting an electrical plug with a flexible conduit. The flexible conduit comprises a plurality of ribs along the conduit, an open end and one or more wires extending through the conduit and the open end. The adaptor comprises a housing. The housing comprises a conduit connector portion configured to fit around and connect to the open end of the flexible conduit, a locking mechanism configured to lock the conduit in the conduit connector portion of the adaptor, an electrical plug opening opposite the conduit connector portion and connecting elements to connect and lock the electrical plug to the adaptor. The electrical plug opening configured to receive at least part of the electrical plug within an interior volume of the housing to enable contact within the housing interior volume between the one or more wires extending through the flexible conduit and one or more wire receptacles in the electrical plug. The invention is further directed at an assembly kit and assembly comprising two or three of a flexible conduit, adaptor and electrical plug.

## Description

### Technical Field

The invention relates to an adaptor for connecting an electrical plug with a flexible conduit and a method thereof. Furthermore, the invention relates to a kit comprising an adaptor and a flexible conduit, and an assembly comprising an adaptor, a flexible conduit and an electrical plug.

### Background Art

Most construction projects require electrical wiring to be installed. Preferably pre-wired corrugated flexible conduits are used to enable quick and safe installation. These conduits carry a plurality of wires that can be used to distribute power, light, data and communication signals to different floors and zones of a building.

The wires extending through the flexible pre-wired conduit can provide energy or a signal to many different devices, such as electrical appliances, lights, multimedia devices or communication devices. Typically, part of the outer flexible conduit may be removed so that ends of the wires, typically a few centimeters, are exposed and extend from the end of the flexible conduit. The extending wires may then be connected to a suitable plug, for example, using a shrinkdown hose. A problem experienced with this method is that the wire in the shrinkdown hose is relatively unprotected and therefore prone to damages. Moreover, making the connection using a shrinkdown hose is rather time-consuming.

It would be desirable to provide a system for connecting wires to electrical plugs, which improves on the existing practice and enables a quick and safe connection.

### Summary of Invention

Therefore, according to a first aspect of the invention, there is provided an adaptor for connecting an electrical plug with a pre-wired flexible conduit comprising a plurality of ribs along the conduit, an open end and one or more wires extending through the conduit and the open end. The adaptor comprises a housing comprising a conduit connector portion configured to fit around and connect to the open end of the flexible conduit; a locking mechanism configured to lock the conduit in the conduit connector portion of the adaptor; an electrical plug opening opposite the conduit connector portion, the electrical plug opening configured to receive at least part of the electrical plug within an interior volume of the housing to enable contact within the housing interior volume between the one or more wires extending through the flexible conduit and one or more wire receptacles in the electrical plug; and connecting elements to connect and lock the electrical plug to the adaptor.

Advantageously, the adaptor provides a safe connection between the wires in the pre-wired conduit and the electrical plug and protects the wires well. Moreover, the adaptor allows for a quick connection of the wires, can cheaply be manufactured and is aesthetically attractive.

In an embodiment, the locking mechanism comprises one or more circumferential rings or ring segments extending from an inner surface of the conduit connector portion, wherein the parts of the one or more circumferential rings or ring segments are configured to fit between the ribs of the flexible conduit to lock the flexible conduit to the adaptor. By including the locking mechanism internally in the adaptor the connection is more robust. The connection can withstand relative large forces in all directions and the risk of accidentally extracting the wire under a tensile force is low as the ring enters between the ribs and locks the conduit.

In a further embodiment, the locking mechanism comprises at least one full circumferential ring. It is advantageous to maximize the surface area of the circumferential ring that contacts the ribs. A maximal surface reduces the surface stress per unit area and thereby increases the strength of the connection. Alternatively, the locking mechanism may comprise only segments of a ring. The segments of the ring may together extend along at least 50% of the circumference of a ring.

In an embodiment, the conduit is received within the housing interior volume over a length of at least half the diameter of the conduit, preferably at least once the diameter of the conduit. Enclosing part of the exterior of the conduit within the housing improves the stability of the connection between the conduit and the adaptor. Moreover, it contributes to a correct alignment of the wires extending from the opening of the conduit and into the housing. As such, the wires are less prone to be damaged when large bending forces are exerted on a conduit with connected adaptor.

In an embodiment, the housing comprises a bottom housing part and a top housing part, the bottom housing part having one or more coupling features and the top housing part having one or more complementary coupling features, the coupling features and complementary coupling features arranged to couple the housing parts. Advantageous to a housing comprising a plurality of housing parts is that easy access to an interior volume of the housing is provided. The conduit and an electrical plug can be arranged in a half open housing before the housing parts are connected to each other, which makes assembly of a conduit and electrical plug in an adaptor fast. Examples of coupling features and complementary coupling features are male and female connection portions of for instance a snap-fit connection. Other examples include clips and clip holes on the exterior, or a crush pin connection. In embodiments, the housing parts may also be hingedly connected to each. In such embodiment, the coupling features and complementary coupling features are typically positioned opposite to the hinge. In embodiments, the housing may also comprise more than two housing parts, for example three or four housing parts. Alternatively, the housing may by integrally formed.

In a further embodiment, the one or more coupling features and complementary coupling features are arranged to make one or more snap-fit connections. Snap-fit connections are reliable and quick in use. The snap-fit connection may also provide a detachable connection, which allows for easy reuse of the adaptor or adaptor housing parts. In a preferred embodiment, the one or more coupling features and complementary coupling features are arranged to make multiple snap-fit connections. This enables a more secure connection.

In an embodiment, the housing is substantially closed. Here the term substantially closed is used to indicate that the housing is closed apart from the necessary openings for the conduit connector and electronic plug. This contributes to a safe and reliable connection. Little or no dust can enter the interior volume of the housing and the adaptor is splash proof.

In an embodiment, the adaptor is configured to provide a semi-permanent connection. Here the term "semi-permanent" is used to indicate a connection that can only be dismantled with the aid of a tool, for example a screwdriver, hex key, adjustable spanner, wrench or pliers. In other embodiments, the adaptor may be configured to provide a permanent connection, which means that the connection cannot be broken without damaging or breaking the housing. Examples of a permanent connection include a permanent snap-fit connection and the use of adhesives to connect parts of the adaptor, electrical plug, and/or conduit parts with each other. It may be advantageous to provide an adaptor that is configured to engage in a semi-permanent or permanent connection to comply with certain norms. For example, for certain types of installations it may be required to use only adaptors intended for semi-permanent or permanent connection in fixed installations. Therefore in embodiments it may be impossible to dismantle the adaptor without the aid of a tool.

In a preferred embodiment, the adaptor comprises at least two different types of connecting elements for connecting and locking at least two different types of electrical plugs to the adaptor. Such embodiments are universal adaptors that allow mounting of plugs having different types of complementary connecting elements. In an embodiment, the connecting elements comprise a pair of pins arranged to be received in a mating pin slot of the electrical plug. In an embodiment, the connecting elements comprise a sill extending from an inner surface of the housing, arranged to be received in a mating groove of the electrical plug.

In an embodiment, the housing or housing parts are injection molded. Injection molding leads to a low price per part.

In an embodiment, the housing is made of polypropylene. Polypropylene is relatively cheap and durable.

In an embodiment, the conduit connector portion comprises a cylindrical portion of the housing extending out of the housing. The conduit typically has a circular cross-section, whereas plugs typically have a more rectangular fit. The cylindrical portion is configured to tightly fit the conduit and therefore optimally uses the space.

In an embodiment, the conduit connector portion is configured to receive and lock a flexible conduit having an outer conduit diameter between 10 mm and 24 mm, preferably 16 mm or 20 mm. The skilled person will understand that flexible pre-wired conduits have a standard outer diameter of 16 mm for conduits with 3 wires and an outer diameter of 20 mm for conduits with 4 or 5 wires. Nevertheless, it will be understood that the design of the adaptor is scalable to fit any size of conduit.

In an embodiment, the wires extending from the flexible conduit are solid wires. The electrical plug has a plurality of spring connectors in the wire receptacles. Alternatively, the wires may be stranded wires. Solid wires are not so flexible and can be used in combination with spring connectors, which allows for easier and quicker assembly than the screw connectors that are required for stranded wires. In embodiments, the solid wires may also be used in combination with screw connectors.

In an embodiment, the adaptor and electrical plug opening are configured to allow connecting the electrical plug with a mating electrical plug. Such a mating electrical plug may for instance extend from a plug and play wall outlet, a switch, or an electrical installation.

According to a second aspect of the invention and in accordance with the advantages and effects described herein above, there is provided a bottom housing part for use with the top housing part of an adaptor as described above. A housing comprising multiple parts is easy in use. The conduit and electrical part may be connected to or arranged in one of the housing parts before the housing parts are connected to form an integral housing.

According to a third aspect of the invention and in accordance with advantages and effects described herein above, there is provided a conduit connector kit, comprising an adaptor according to the invention and a flexible conduit.

According to a further aspect of the invention and in accordance with advantages and effects described herein above, there is provided an assembly of a flexible conduit and an electrical plug, wherein the flexible conduit and the electrical plug are connected through an adaptor according to the invention.

In an embodiment, the assembly further comprises a mating electrical plug and the electrical plug is connected with the mating electrical plug. In a further embodiment, the assembly comprises a second adaptor and a second flexible conduit. The wires in the two flexible conduits may be connected to each other through the two mating electrical plugs that extend from the respective adaptors.

According to yet a further aspect of the invention, there is provided a method for connecting a flexible conduit and an electrical plug using an adaptor, the adaptor having a housing comprising a conduit connector portion and a plug opening opposite to the conduit connector portion, wherein the method comprises: providing a flexible conduit comprising a plurality of ribs along the conduit, an open end and one or more wires extending through the conduit and the open end; arranging the flexible conduit in the conduit connector portion so that the open end extends in the interior volume of the adaptor housing; providing an electrical plug having one or more wire receptacles and one or more complementary connecting elements for connecting to the connecting elements of the adaptor; arranging the electrical plug to extend through the plug opening and into an interior volume of the housing; placing the one or more wires in the wire receptacles; locking the conduit to the conduit connector portion, and locking the electrical plug to the adaptor housing using the connecting elements and complementary connecting elements.

In an embodiment, the adaptor housing comprises a bottom housing part and a top housing part. The method further comprises the step of fastening the top and bottom housing part and wherein the step of locking the conduit to the conduit connector portion includes a locking by fastening the top and bottom housing part.

In an embodiment, the adaptor housing comprises a bottom housing part and a top housing part. The method further comprises the step of fastening the top and bottom housing part and wherein the step of locking the electrical plug to the adaptor housing includes a locking by fastening the top and bottom housing part.

### Brief Description of Drawings

Embodiments will now be described, by way of example only, with reference to the accompanying schematic drawings in which corresponding reference symbols indicate corresponding parts. In the drawings, like numerals designate like elements. Multiple instances of an element may each include separate letters appended to the reference number. For example, two instances of a particular element "20" may be labeled as "20a" and "20b". The reference number may be used without an appended letter (e.g. "20") to generally refer to an unspecified instance or to all instances of that element, while the reference number will include an appended letter (e.g. "20a") to refer to a specific instance of the element.
Figure 1A shows an assembly of a flexible conduit and an electrical plug, connected through an adaptor. Figure 1B shows the same assembly as Figure 1A, wherein a top part of the adaptor housing has been removed.
Figure 2A presents a perspective view of a bottom part of the adaptor housing according to a first embodiment. Figures 2B and 2C show a cross sectional side view and a top view of the bottom part of the adaptor housing according to the first embodiment.
Figure 3A shows a perspective view of a top part of the adaptor housing according to the first embodiment. Figures 3B and 3C show cross sectional side and bottom views of the top part of the adaptor housing according to the first embodiment.
Figures 4A and 4B show details of the connection between the top part and bottom part of the adaptor housing according to the first embodiment.
Figure 5 schematically shows a side view of a first embodiment of an electrical plug compatible with the embodiment of the adaptor.
Figures 6A and 6B schematically show a side and top view of a second embodiment of an electrical plug compatible with the first embodiment of the adaptor.

The figures are meant for illustrative purposes only, and do not serve as restriction of the scope or the protection as laid down by the claims.

### Description of Embodiments

The following is a description of certain embodiments of the invention, given by way of example only and with reference to the figures.

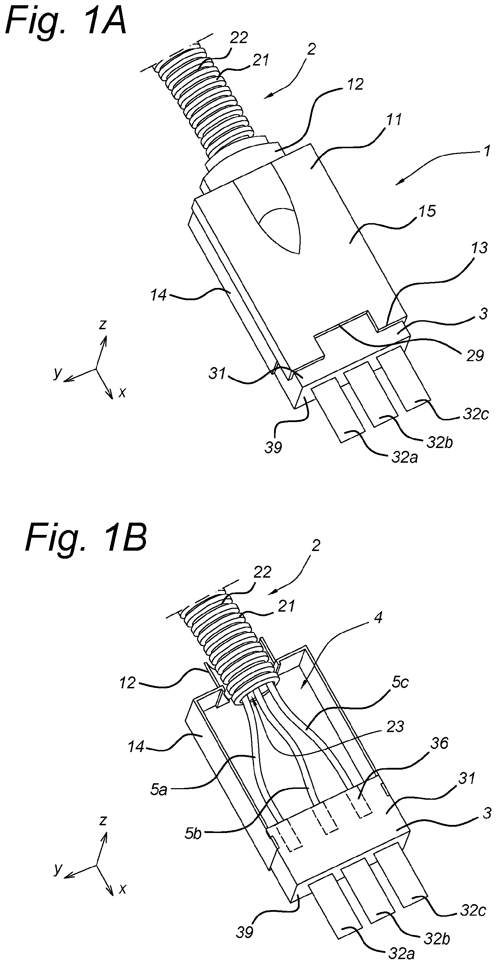

Figure 1A schematically shows a perspective view of an embodiment of an assembly wherein a pre-wired flexible conduit 2 is connected with an electrical plug 3 through an adaptor 1. The flexible conduit 2 has a plurality of ribs 21 along the circumference of the conduit 2. The ribs 21 define recesses 22 in between the ribs 21 and together the ribs 21 and recesses 22 provide the conduit 2 with flexibility. This flexibility is beneficial for application of the conduit 2 in constructions and moreover allows the conduit 2 to be rolled onto a coil to ease transport of the conduit 2. In this embodiment, the conduit 2 is made of Polypropyleen (PP), yet other flexible materials and/or other plastics may also be used.

The electrical plug 3 has a plug body 31, having a plug surface 39 wherefrom three plug pins 32a,32b,32c extend. The plug surface 39 may be substantially flat with a number of plug pins 32 extending as depicted. In other embodiments, the plug surface 39 can have one or more channels for receiving a plug pin of a mating plug or of a device port. It will be understood that a large variety of different electrical plugs may exist, and as such the plug surface 39 can vary greatly.

The adaptor 1 has a housing 11. On a first side of the housing 11, the conduit 2 is connected through a conduit connector portion 12. The conduit connector portion 12 is configured to fit around the conduit 2 tightly and lock the flexible conduit 2 to the adaptor 1. The conduit connector portion 12 is tapered or stepped to gradually blend into the housing 11, thereby avoiding sharp edges in the interior volume of the housing 11 and minimizing the risk of damaging the flexible conduit or wires within. In addition, the gradual transition improves the aesthetics of the adaptor 1.

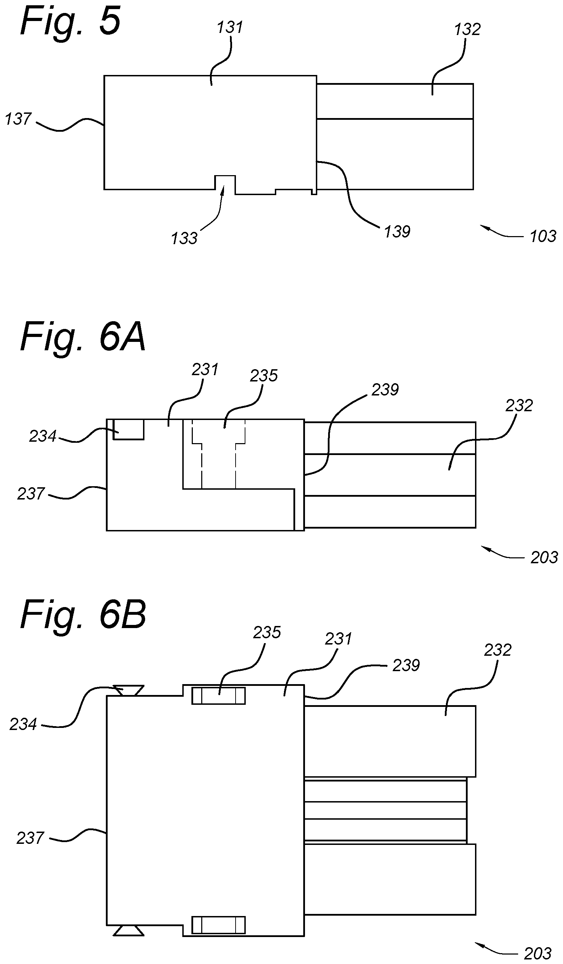

On a second side of the housing 11, opposite to the conduit connector portion 12, the housing 11 has an opening 13 for receiving the plug body 31 of the electrical plug 3. The plug surface 39 of the plug 3 extends freely from the adaptor 1. As will be described with reference to Figures 5 and 6 below, the housing 11 and plug body 31 have connecting elements and complementary connecting elements for engaging and interlocking with each other.

The electrical plug 3 in this embodiment is a 3-pole male plug, which may be connected and locally secured to a compatible 3-pole female plug. To that end, the housing 11 comprises an indent 29 that provides space for a plug locking mechanism (not shown) for interlocking the male plug 3 with an additional female plug, the male and female plug being compatible. The electrical plug pins 32 are received in one or more channels of the female plug, and the plug bodies of the male and female plugs are interlocked through the plug locking mechanism that can be partially arranged in the indent 29.

The housing 11 of the adaptor 1 is substantially closed. Apart from the necessary openings for the conduit connector 12 and electronic plug 3, the adaptor is closed with no openings of any significant size. This prevents dust, liquids or other contaminants from entering in the interior volume of the housing 11, making the adaptor 1 splash proof.

In this embodiment, the housing 11 comprises a bottom part 14 and top part 15, which are clicked onto each other to form the housing 11. In some embodiments, the two parts could be arranged differently (e.g., side parts), or there could be more than two parts which secure together. This allows easy engagement of the conduit 2 and plug 3. The conduit 2 and plug 3 can be arranged in the bottom part 14, and easily locked by fastening the top part 15 to the bottom part 14.

Figure 1B shows a perspective view of the same embodiment wherein the top part 15 of the housing 11 has been removed. The conduit 2 extends partially into an interior volume 4 of the adaptor 1. Receiving the conduit 2 in the interior volume 4 of the housing 11 leads to a stable connection of the conduit 2 and conduit connector portion 12. In other embodiments, the extension of the conduit 2 into the housing can vary, but should be such that it is secured to housing 11.

Preferably, a portion of the conduit 2 between 0.5 and 1.5 times the conduit diameter extends within the housing 11, preferably a portion of the conduit 2 between 1 and 1,5 times the conduit diameter extends within the housing 11. It will be understood that the number of ribs 21 extending in the housing 11 may depend on the pitch between the ribs 21. In embodiments, the ribs 21 are preferably spaced at a pitch of approximately 2 to 5 mm from each other. Consequently, in embodiments between two and six ribs 21 may typically extend within the interior volume 4 of the housing 11. In the depicted embodiment, four ribs 21 extend into the interior volume 4 of the housing 11.

The conduit 2 has an outer diameter of 16 mm. Three wires 5a,5b,5c extend from an open end 23 if the conduit 2 into the interior volume 4. It will be understood that among embodiments the outer conduit diameter may vary and the adaptor 1 may easily be scaled to accommodate conduits 2 with other outer conduit diameters or plugs having different plug dimensions. The outer conduit diameter may for instance be between 12 mm and 50 mm, although the skilled person will realize that conventional conduits typically have an outer conduit diameter of 16 mm to carry three wires, or an outer conduit diameter of 20 mm to carry four or five wires. The size of the adaptor and specifically the size of the conduit connector portion may be adjusted to receive flexible conduits of a particular diameter.

The wires 5 are solid wires, which can easily and quickly be connected in three wire receptacles 36 in the plug body 31. Preferably, the plug 3 carries some spring connectors as this allows for a very quick connection, but also plugs having other connectors such as a screw connector may be used,

The use of the adaptor 1 for connecting the wires 5 extending from the conduit 2 to the plug 3 increases the safety and robustness of the connection. The loose wires 5 are included entirely within the interior volume 4 of the adaptor 1 and are therefore protected. After the conduit 2 and plug 3 have been connected through the adaptor, the plug 3 may be directly plugged into a device to establish a quick and safe electrical connection.

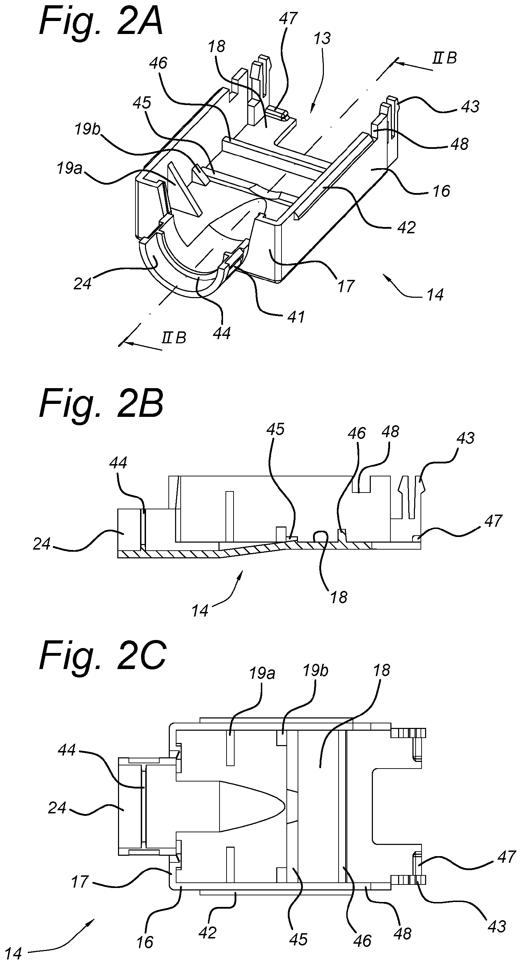

Figures 2A-2C show the bottom part 14 of the adaptor 1 according to a first embodiment. Figure 2A shows a perspective view, Figure 2B shows a cross sectional side view, and Figure 2C shows a top view. The bottom part 14 includes a lower conduit connector portion 24, a front wall 17 through which the lower conduit connector portion 24 extends, two side walls 16 and a lower surface 18. Example dimensions for the bottom part 14, excluding the conduit connector portion 12, can be approximately 30,1 mm wide, 48,4 mm long, and 13 mm high.

The lower conduit connector portion 24 is shaped as a half cylinder and forms the lower part of the conduit connector portion 12. On an inner surface of lower conduit connector portion 24 a lower circumferential ring segment 44 is provided. The lower circumferential ring segment 44 must be dimensioned to extend within a recess 22 between two subsequent ribs 21 of the flexible conduit 2, For example, the lower circumferential ring may have a thickness of 1 mm and may protrude 1 mm from the inner surface of the lower conduit connector portion 24. When the housing parts 14,15 have been assembled, the lower circumferential ring segment 44 acts as locking mechanism. The housing parts 14,15 prevent lateral movement of the conduit 2, whereas the lower circumferential ring segment 44 prevents disengagement of the conduit 2 from the adaptor 1 along a central axis of the conduit 2.

It will be understood that the position of the lower circumferential ring segment 44 can be varied along the inner surface of the lower conduit connector portion 24. In embodiments, the conduit connector portion 12 may also have more than one lower circumferential ring segment 44. In that case the plurality of lower circumferential ring segments 44 can be spaced from each other at a distance that allows each ring segment to grip into a recess 22 of the conduit 2. Such one or more circumferential rings or ring segments protect against axial forces pulling the flexible conduit 2 from the adaptor 1.

The bottom part 14 further comprises a number of connecting elements 43, 46, 48 for connecting the plug body 31 to the bottom part 14 and housing 11. The connecting elements include a pair of pins 43, a sill 46, and a notch 48. The pair of pins 43 extends upward from the lower surface 18. An electrical plug 3 having a body 31 with a mating pin slot may be attached and interlocked with the bottom part 14 through pins 43. A notch 48 is arranged at an upper end of each side wall 16 and is configured to receive a mating protrusion of the plug body 3. In addition, or alternatively, an electrical plug 3 with a groove that is configured to mate with the sill 46 can be placed over the sill 46.

The connecting elements 43, 46 secure the connection with the plug 3. Front and back guiding elements 45, 47 provide stability to the connection. The front guiding element 45 is arranged within the interior volume 4 of the housing 11 and supports a lower surface of the plug 3 once mounted. The back guiding elements 47 are positioned in the opening 13 and also support the lower surface of the plug 3. In embodiments of the assembly, a plug may be supported by both guiding elements, or only one of the guiding elements.

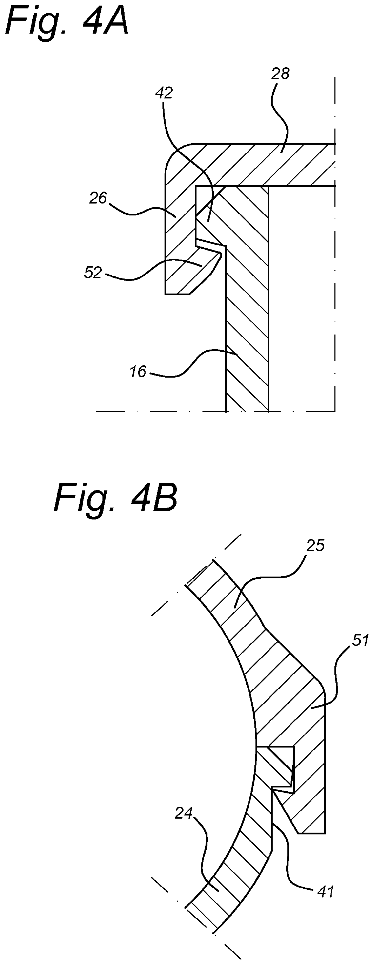

The bottom part 14 of the adaptor is configured to be mated with a top housing part 15, so that after assembly both the conduit 2 and plug 3 are locked in the housing 11. To that end, the bottom part 14 further has a number of coupling features 41, 42 that are configured to be mated with a number of complementary coupling features of the top housing part 15. The lower conduit connector portion 24 has a recess 41 on both sides along its exterior circumference wherein complementary features extending from the top part 15 may engage. In addition, the side walls 16 each have a bar 42 that protrudes outward from the respective side walls 16. The bars 42 are elongated and have a trapezoidal cross section. The bars 42 are arranged to be clamped by clamping elements in the top housing part 15. The connection between the housing parts 14,15 will be described in more detail with reference to Figs. 4A-B below.

The lower surface 18 and side walls 16 are strengthened by a number of supporting structures 19. These supporting structures 19 improve the structural stability, and allow manufacture through injection molding. Both the bottom part 14 and top part 15 can be made of Polypropylene (PP) and manufactured through injection molding, making the cost per housing part 14,15 and per adaptor 1 very economical.

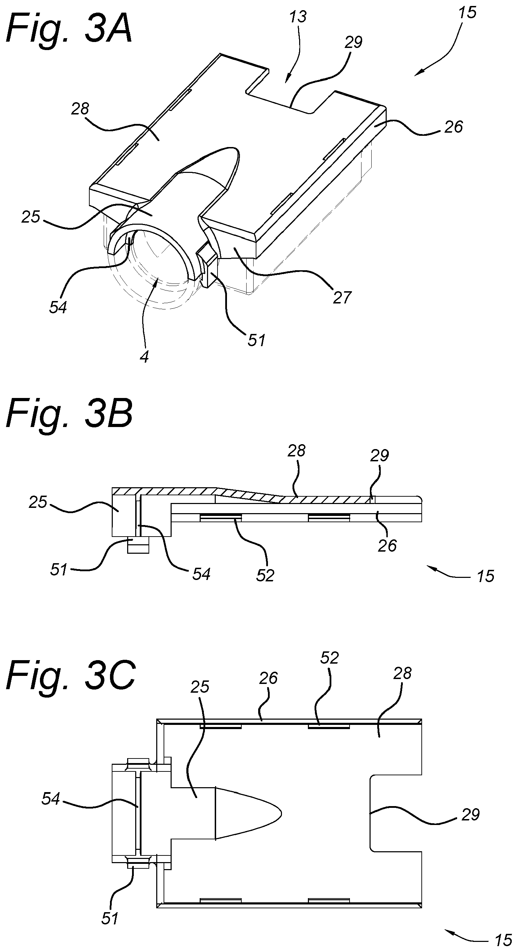

Figures 3A-3C show the top part 15 of the adaptor 1 according to the first embodiment. The top part 15 is configured to mate with the bottom part 14. Figure 3A shows a perspective view, wherein the bottom part 15 is schematically indicated. Figure 3B shows a cross sectional side view and Figure 3C shows a bottom view.

The top part 15 has an upper conduit connector portion 25, an upper plane 28, two upper side walls 26 and a front wall 27. The upper plane 28 is substantially flat and has an indent 29 to provide space for a plug locking mechanism.

The upper conduit connector portion 25 comprises an upper circumferential ring segment 54, which together with the lower circumferential ring segment 44 locks the conduit 2 in the conduit connector portion 12. It will be understood that in some embodiments the circumferential ring may be interrupted, for example, only the upper circumferential ring segment 54 or only the lower circumferential ring segment 44, or parts of each may be used to lock the conduit 2.

The top part 15 has a number of complementary coupling features 51, 52. On each side a lip 51 extends from an exterior surface of the upper conduit connector portion 25. The lips 51 are configured to hook into the recesses 41 in the lower conduit connector portion 24. In addition, Figs. 3B and 3C show that the top part 15 has a plurality of clamping elements 52 that are arranged on the inner surface of the side walls 26 as complementary coupling features to the bars 42. When connecting the housing parts 14,15, the top part 15 slides over the bottom part 14. Consequently, the connection features for securing the housing parts 14,15 are not visible from the outside. This contributes to the robustness of the housing 11 and makes it aesthetically attractive.

Figures 4A and 4B provide details of the coupling of the housing parts through the coupling elements 41, 42 and complementary coupling elements 51, 52. Fig. 4A shows a detail of the connection between the bars 42 and clamping elements 52. When pressure is applied to push the bottom part 14 and top part 15 together, the side walls 26 of the top part 15 are slightly deflected, allowing the bars 42 to be placed in the space between the upper surface 28 and clamping elements 52. The clamping elements 52 hook around the bars 42 and clamp the bars 42 between the clamping elements 52 and the upper surface 28.

Figure 4B shows a detail of a connection between the bottom part 14 and top part 15 at the conduit connector portion 12. The lips 51 of the upper conduit connector portion 25 can engage the recesses 41 on the lower conduit connector portion 24 and lock both portions 24,25 through a cantilever snap-fit connection. When a pressure is applied to push the bottom part 14 and top part 15 towards each other, the lips 51 deflect outwards. The deflection allows the lips 51 to be moved over the exterior surface of the lower conduit connector portion 24 and into the recesses 41.

The coupling of the housing 11 through a pair of snap-fit connections is quick and easy. The housing parts 14,15 are connected at six locations, which makes the connection strong and makes accidental disengagement almost impossible. Rodents or other animals should not manage to unlock the adaptor 1 and damage the wires 5 accidently. Nevertheless, the adaptor 1 according to this first embodiment may be opened easily by humans by applying pressure at the correct positions. In other embodiments, such easy opening by humans can also be made impossible, for instance to improve safety.

It will be understood that the housing parts 11 can be connected in various others ways or may in embodiments also be integrally formed of only one piece. In embodiments, the connection may be detachable, semi-permanent, or permanent. Herein a permanent connection is meant to refer to an adaptor that cannot be disassembled without damaging the adaptor. The term "semi-permanent" refers to an embodiment wherein the adaptor cannot be dismantled anymore after assembly without the aid of a tool. For example, in an alternative embodiment the adaptor may have multiple housing parts that are connected to each other using a plurality of screws, which may be only be unscrewed using a screw driver. According to yet another embodiment, the adaptor has a housing comprising a bottom part and top part that are integrally formed and hingedly connected on one side wall through a living hinge. The wall opposite to the hinge may be provided with coupling features and complementary coupling features to lock the housing parts together. This coupling features may establish both a coupling of detachable as well as of semi-permanent or permanent nature. The skilled person will understand that the selection of a clamping mechanism can be selected in agreement with prevailing standards, such as the NEN-EN-IEC 61535:2020 norm, which sets the standard for installation couplers intended for permanent connection in fixed installations.

The above described embodiment of the adaptor is a universal adaptor. This means that the adaptor can be used in combination with more than one type of plug 3. The connectors for which the adaptor 1 is suited may have complementary connecting features for one or more of the pins 43, the sill 46 or the notch 48.

Figure 5 schematically shows a side view of a first embodiment of an electrical plug 103 having a plug body 131 that can be connected to the adaptor 1 according to the first adaptor embodiment. The bottom surface of the plug body 131 comprises a groove 133 that is dimensioned to receive the sill 46 of the bottom part 14. Once the plug 103 is mounted in the adaptor 1, a front surface 137 of the plug body 131 is approximately aligned with the front guiding element 45 and the front guiding element 45 supports the plug body 131. The plug pins 132 are supported from below by the back guiding elements 47 and hence the plug surface 139 is also arranged within the housing 11 but accessible through the opening 13. An example of a plug having such complementary connecting features is the WAGO WINSTA 3-pole plug 770-203 connector made by WAGO Kontakttechnik GmbH &Co. KG of Germany, or WAGO Nederland B.V. of the Netherlands.

Figure 6 schematically shows a second embodiment of an electrical plug 203 having a plug body 231 that can be connected to the adaptor 1 according to the first adaptor embodiment. The plug body 231 has a pin slot 235, which is configured to receive the pins 43. To engage the plug body 231 with the lower surface 18 of the bottom part, the plug body 231 is pushed onto the pins 43. The pins 43 deflect toward each other and bend back into their original position when the pins 43 extend far enough into the pin slot 235. The plug body 231 further comprises two protrusions 234 on both sides of the connector, extending from the sidewalls of the plug body 231. The protrusions 234 are received in the notches 48 of the housing 11.

The plug 203 is placed at a more backward position in the adaptor 1 than the plug 103 according to the first embodiment. In the mounted position, the front wall 237 of the plug body 231 is approximately aligned with the sill 46. An example of a plug having such complementary connecting features is the 3-pole GST18I3 connector made by Wieland Electric GmbH of Germany.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. It will be apparent to the person skilled in the art that alternative and equivalent embodiments of the invention can be conceived and reduced to practice. All changes which come within the meaning and range of equivalency of the claims are to be embraced within their scope.

For example, the ribs of the flexible conduit may be spaced at any distance from each other, provided that they provide enough space for a locking mechanism to engage. This locking mechanism may be formed by the circumferential ring as described above, but may also be a different locking mechanism. An exemplary alternative is an engagement that takes place by using clamps that extend from the exterior surface of the conduit connector portion or other housing parts to grip into a recess between two adjacent ribs.

The skilled person will further understand that the specific details for connecting the wires to the electrical plug may depend on the desired connection and the type and number of wires extending through the pre-wired flexible conduits. In the above described embodiment solid wires have been used, but it will be understood that other types of wires such as stranded wires may also be used. Similarly, in the above described embodiment 3-pole plug with spring connectors in the wire receptacles have been used, but it will be understood that also 4- and 5-pole plug connectors may be used which may also use for instance a screw connector in the wire receptacles. The skilled person will understand which plugs and which type of connector are compatible with each other and suited for use with each type of wire.

The contact between the wires and the wire receptacles can also be referred to as a tensile contact because it is not only a contact but also has some tensile strength, which is at least sufficient to prevent accidental disengagement of the wires from the wire receptacles.

In embodiments, the adaptor may be configured to be specifically suited for connecting to 3-pole plug connectors such as the WAGO WINSTA 3-pole female plug 770-203, WAGO WINSTA 3-pole male plug 770-213, GST18I3 Wieland Electric male connector and GST18I3 Wieland Electric female connector. In other embodiments the adaptor may be configured to be specifically suited for connecting to 4-pole plug connectors such as the WAGO WINSTA 4-pole female plug 770-204, WAGO WINSTA 4-pole male plug 770-214, the GST18I4 Wieland Electric male connector and GST18I4 Wieland Electric female connector. In yet other embodiments, the adaptor may be configured to be specifically suited for connecting to 5-pole plug connectors such as the WAGO WINSTA 5-pole female plug 770-205, WAGO WINSTA 5-pole male plug 770-215, the GST18I5 Wieland Electric male connector and GST18I5 Wieland Electric female connector.

## Claims

1. An adaptor for connecting an electrical plug with a pre-wired flexible conduit comprising a plurality of ribs along the conduit, an open end and one or more wires extending through the conduit and the open end, the adaptor comprising:
a housing comprising
a conduit connector portion configured to fit around and connect to the open end of the flexible conduit;
a locking mechanism configured to lock the conduit in the conduit connector portion of the adaptor;
an electrical plug opening opposite the conduit connector portion, the electrical plug opening configured to receive at least part of the electrical plug within an interior volume of the housing to enable contact within the housing interior volume between the one or more wires extending through the flexible conduit and one or more wire receptacles in the electrical plug; and
connecting elements to connect and lock the electrical plug to the adaptor.

2. The adaptor according to claim 1, wherein the locking mechanism comprises one or more circumferential rings or ring segments extending from an inner surface of the conduit connector portion, wherein the parts of the one or more circumferential rings or ring segments are configured to fit between the ribs of the flexible conduit to lock the flexible conduit to the adaptor, preferably wherein the locking mechanism comprises at least one full circumferential ring.

3. The adaptor according to any of the preceding claims, wherein the conduit is received within the housing interior volume over a length of at least half the diameter of the conduit, preferably at least once the diameter of the conduit.

4. The adaptor according to any of the preceding claims, wherein the housing comprises a bottom housing part and a top housing part, the bottom housing part having one or more coupling features and the top housing part having one or more complementary coupling features, wherein the coupling features and complementary coupling features are arranged to couple the housing parts, preferably wherein the one or more coupling features and complementary coupling features are arranged to make one or more snap-fit connections.

5. The adaptor according to any of the preceding claims, wherein the housing is substantially closed.

6. The adaptor according to any of the preceding claims, wherein the adaptor is configured to provide a semi-permanent or permanent connection between the wires in the flexible conduit and the electrical plug.

7. The adaptor according to any of the preceding claims, wherein the connecting elements comprise a pair of pins arranged to be received in a mating pin slot of the electrical plug.

8. The adaptor according to any of the preceding claims, wherein the connecting elements comprise a sill extending from an inner surface of the housing, arranged to be received in a mating groove of the electrical plug.

9. The adaptor according to any of the preceding claims, wherein the adaptor comprises at least two different types of connecting elements for connecting and locking at least two different types of electrical plugs to the adaptor.

10. The adaptor according to any of the preceding claims, wherein the housing is injection molded.

11. The adaptor according to any of the preceding claims, wherein the conduit connector portion comprises a cylindrical portion of the housing extending out of the housing.

12. The adaptor according to any of the preceding claims, wherein the conduit connector portion is configured to receive and lock a flexible conduit having an outer conduit diameter between 10 mm and 24 mm, preferably 16 mm or 20 mm.

13. A conduit connector kit, comprising an adaptor according to any of claims 1-12 and a flexible conduit.

14. An assembly of a flexible conduit and an electrical plug, wherein the flexible conduit and the electrical plug are connected through an adaptor according to any of claims 1-12.

15. A method for connecting a pre-wired flexible conduit and an electrical plug using an adaptor, the adaptor having a housing comprising a conduit connector portion and a plug opening opposite to the conduit connector portion, wherein the method comprises:
providing a pre-wired flexible conduit comprising a plurality of ribs along the conduit, an open end and one or more wires extending through the conduit and the open end,
arranging the flexible conduit in the conduit connector portion so that the open end extends in the interior volume of the adaptor housing,
providing an electrical plug having one or more wire receptacles and one or more complementary connecting elements for connecting to the connecting elements of the adaptor,
arranging the electrical plug to extend through the plug opening and into an interior volume of the housing,
placing the one or more wires in the wire receptacles,
locking the conduit to the conduit connector portion, and
locking the electrical plug to the adaptor housing using the connecting elements and complementary connecting elements.
